# EUROPEAN PATENT APPLICATION

(11) **EP 4 328 265 A1**
(43) Date of publication of application: **28.02.2024**
(21) Application number: 21937758.7
(22) Date of filing: 28.12.2021
(51) Int. Cl.: C08L 23/06, C08L 23/16, C08L 23/08, C08L 51/06, C08K 3/26, G02B 6/44

(54) **LOW SHRINKAGE POLYETHYLENE SHEATH MATERIAL, PREPARATION METHOD THEREFOR AND APPLICATION THEREOF**

(30) Priority: 22.04.2021 CN 202110436524
(71) Applicant: Jiangsu Zhongtian Technology Co., Ltd., Nantong, Jiangsu 226463 (CN)
(72) Inventor: MIAO, Fei, Nantong, Jiangsu 226463 (CN); SUN, Guangwei, Nantong, Jiangsu 226463 (CN); WU, Fei, Nantong, Jiangsu 226463 (CN); HAN, Peicen, Nantong, Jiangsu 226463 (CN); LU, Jinjie, Nantong, Jiangsu 226463 (CN); ZUO, Qiupeng, Nantong, Jiangsu 226463 (CN); GUAN, Chengfei, Nantong, Jiangsu 226463 (CN)
(74) Representative: Zaboliene, Reda
(86) International application number: PCT/CN2021/142159
(87) International publication number: WO 2022/222536

(57) **Abstract**

A low-shrinkage polyethylene sheathing material, a method for preparing the same, and an application thereof. The low-shrinkage polyethylene sheathing material comprises the following weight percentages of components: LLDPE resin of 35-45%, MDPE resin of 20-25%, HDPE resin of 4-15%, elastomer of 4-15%, inorganic powder material of 2-15%, compatibilizer of 1-13%, black masterbatch of 4.7-5.7%, lubricant of 0.2-1%, antioxidant of 0.3-0.5%, and light stabilizer of 0.1-0.6%. The low-shrinkage polyethylene sheathing material provided by the present invention overcomes the problem of high cable shrinkage rate of commonly used polyethylene sheathing materials. The obtained sheathing material has basically no shrinkage phenomenon after high and low temperature cycling, and has excellent processing and mechanical properties.

## Description

### TECHNICAL FIELD

The subject matter relates to polyethylene sheathing materials, and more particularly to a low-shrinkage polyethylene sheathing material, a method for preparing the same and an application thereof.

### BACKGROUND

Polyethylene materials have been widely used in the optical cable industry. However, due to the semi-crystalline nature of polyethylene, significant shrinkage occurs during extrusion molding when used as a sheathing material. The thermal shrinkage of the sheath specified by the outdoor optical cable standard in the communication industry is relatively wide, ≤5%, which cannot meet the actual use requirements.

Existing black polyethylene sheathing materials have relatively high shrinkage rates after cabling, exceeding 1%. For optical cables without armor and unsupported reinforcement structures, excessive sheath shrinkage can lead to fiber attenuation problems. It can severely cause attenuation exceeding the standard, weakening of cable fixation and sealing, and even fiber fracture, which can lead to communication interruption accidents. There are many reports on the modification of polyethylene, but relatively few studies on shrinkage rate issues, especially on controlling the sheath shrinkage rate to ≤0.2%, and there are almost no relevant studies about the shrinkage rate of polyethylene.

Currently, the method of improving the shrinkage rate of polyethylene is mainly based on PP modification, which destroys the crystallinity of polyethylene by adding a large amount of fillers, elastomers, and the like. However, after the polyethylene material is used for sheathing, the visual appearance, processing performance, and mechanical properties of the sheath are severely damaged, and cannot meet the customers' needs.

### SUMMARY

Therefore, it is necessary to provide a low-shrinkage polyethylene sheathing material with excellent processing and mechanical properties, as well as a method for preparing the same and an application thereof.

In one embodiment, the low-shrinkage polyethylene sheathing material provided by the present invention comprises the following weight percentages of components: LLDPE resin in the range of 35-45%, MDPE resin in the range of 20-25%, HDPE resin in the range of 4-15%, elastomer in the range of 4-15%, inorganic powder material in the range of 2-15%, compatibilizer in the range of 1-13%, black masterbatch in the range of 4.7-5.7%, lubricant in the range of 0.2-1%, antioxidant in the range of 0.3-0.5%, and light stabilizer in the range of 0.1-0.6%.

In some embodiments, the melt flow rate of the MDPE resin is not greater than 2g/10min at 190°C and 2.16 Kg.

In some embodiments, the melt flow rate of the LLDPE resin is not greater than 3g/10min at 190°C and 2.16 Kg, and the melt flow rate of the HDPE resin is not greater than 10g/min at 190°C and 2.16 Kg.

In some embodiments, the elastomer is selected from at least one of polyolefin elastomer (POE), ethylene-propylene rubber (EPDM) and ethylene-vinyl acetate copolymer (EVA).

In some embodiments, the inorganic powder material is selected from at least one of light calcium carbonate and mica powder, and the particle size of the inorganic powder material is not greater than 0.7µm.

In some embodiments, the compatibilizer is selected from PE-g-ST compatibilizer and POE-g-MAH compatibilizer, and the mass ratio of the PE-g-ST compatibilizer and the POE-g-MAH compatibilizer is 1:1.

In some embodiments, the black masterbatch comprises pigment carbon black and LLDPE resin carrier, in which the mass fraction of the pigment carbon black is not less than 45% in the black masterbatch, and the mass fraction of the LLDPE resin carrier is not less than 50%, and the melt flow rate of the LLDPE resin carrier is not less than 2.0g/10min at 190°C and 2.16kg.

In some embodiments, the lubricant is a fluorine-containing lubricant, and the antioxidant is selected from one or more of antioxidant 1010, antioxidant 1076, antioxidant 330, antioxidant 168, and antioxidant DLTP, and the light stabilizer is selected from one or more of absorber UV326, absorber UV531, and radical scavenger 944.

In another embodiment, the present invention provides a method for preparing any of the low-shrinkage polyethylene sheathing materials described above, comprising the following steps:

Mixing the LLDPE resin, MDPE resin, HDPE resin, elastomer, and compatibilizer resin in the batch mixing equipment according to the weight percentage, obtaining the batch mixed resin, and then putting the mixed resin into the feed bin and adding it to the high-speed mixer.

Adding the inorganic powder material, black masterbatch, lubricant, antioxidant, and light stabilizer according to the weight percentage into the high-speed mixer, starting the high-speed mixer to mix the raw materials uniformly for 60s-300s to obtain a mixed material.

Introducing the mixed material from the feeding port of the twin-screw extruder, and cooling, drying, and granulating the extruded material in the water tank to obtain the low-shrinkage polyethylene sheathing material.

In another embodiment, the present invention provides an application of any of the low-shrinkage polyethylene sheathing materials described above, in which the low-shrinkage polyethylene sheathing material is applied to communication cables without armor and reinforcement structures.

The low-shrinkage polyethylene sheathing material provided by the present invention in some embodiments uses low-crystallinity LLDPE resin and MDPE resin with lower shrinkage rate perpendicular to the melt flow direction, suppresses the overall crystallinity of the material through the elastomer, increases the overall toughness of the material, and reduces the shrinkage rate of the material. At the same time, inorganic powder materials are used to reduce the intermolecular forces to lower the shrinkage rate of the material, and the addition of the inorganic powder material reduces the stress on the optical fibers in the cable sheath during material forming shrinkage, making the fiber attenuation qualified.

### DETAILED DESCRIPTION OF EMBODIMENTS

The technical solutions in the embodiments of the present invention will be described clearly and completely below. It is understood that the embodiments described herein are a part of the embodiments of the present invention, but not all. Based on the embodiments of the present invention, all other embodiments obtained by those skilled in the art without creative efforts are within the scope of protection of the present invention.

According to one embodiment of the present invention, a low-shrinkage polyethylene sheath material is provided, consisting of the following weight percentage components: LLDPE resin in the range of 35-45%, MDPE resin in the range of 20-25%, HDPE resin in the range of 4-15%, elastomer in the range of 4-15%, inorganic powder material in the range of 2-15%, compatibilizer in the range of 1-13%, black masterbatch in the range of 4.7-5.7%, lubricant in the range of 0.2-1%, antioxidant in the range of 0.3-0.5%, and light stabilizer in the range of 0.1-0.6%.

The LLDPE resin has a low crystallinity. The melt flow rate of the LLDPE resin is not greater than 3g/10min at 190°C and 2.16 Kg. The melt flow rate of the HDPE resin is not greater than 10g/min at 190°C and 2.16 Kg.

The melt flow rate of the MDPE resin is not greater than 2g/10min at 190°C and 2.16 Kg. Compared with the LLDPE resin and HDPE resin, the MDPE resin has a lower shrinkage rate perpendicular to the direction of melt flow, which results in less force generated in the direction perpendicular to the traction direction during the formation of the sheath material into a cable, which helps to ensure the attenuation of optical fibers.

According to the GB/T 17037.4-2003 standard, the shrinkage rate Smₙ perpendicular to the direction of melt flow of different polyethylenes (PE) was tested under the same temperature and pressure. The test results are shown in the table below. As can be seen from the table, MDPE has the smallest shrinkage rate perpendicular to the direction of melt flow among the different polyethylene resins.

| PE Material | LDPE Q281 | LLDPE 218wj | mPE CB3518 | MDPE 2310 | HDPE 6502 |
|---|---|---|---|---|---|
| Smₙ | -0.678 | -1.193 | -0.959 | -0.39 | -0.935 |

The elastomer is used to suppress the overall crystallinity of the sheath material and increase the overall toughness of the sheath material, thereby reducing the shrinkage rate of the sheath material. In some embodiments, the elastomer is selected from at least one of polyolefin elastomer (POE), ethylene propylene rubber (EPDM), and ethylene-vinyl acetate copolymer (EVA).

The inorganic powder material is used to reduce the intermolecular forces of the sheath material while simultaneously reducing the shrinkage rate of the sheath material. In some embodiments, the inorganic powder material is selected from at least one of light calcium carbonate and mica powder, and the particle size of the inorganic powder material is not greater than 0.7µm.

The addition of elastomer and inorganic powder material leads to poor compatibility of the formulation system. To address this issue, the compatibilizer is added to improve the compatibility between the components of the sheath material (such as the compatibility between different resins and the compatibility between resin and inorganic powder material), thereby improving the processing and mechanical properties of the sheath material. In some embodiments, the compatibilizer is selected from PE-g-ST compatibilizer and POE-g-MAH compatibilizer, and the mass ratio of PE-g-ST compatibilizer to POE-g-MAH compatibilizer is 1:1.

The black masterbatch comprises pigment carbon black and LLDPE resin carrier. The pigment carbon black accounts for no less than 45% by mass of the black masterbatch, and the LLDPE resin carrier accounts for no less than 50% by mass of the black masterbatch. The melt flow rate of the LLDPE resin carrier is not less than 2.0g/10min at 190°C and 2.16kg.

In some embodiments, the lubricant is selected from fluorine-containing lubricants. In some embodiments, the antioxidant is selected from one or more of antioxidant 1010, antioxidant 1076, antioxidant 330, antioxidant 168, and antioxidant DLTP. In some embodiments, the light stabilizer is selected from one or more of UV absorber UV326, UV absorber UV531, and radical scavenger 944.

Another embodiment of the present invention provides a preparation method of the aforementioned low-shrinkage polyethylene sheathing material, comprising:
S1. Mixing the LLDPE resin, MDPE resin, HDPE resin, elastomer, and compatibilizer resin in batch mixing equipment according to a mass percentage to obtain a uniformly mixed batch of resin; then feeding the mixed resin into a hopper and adding it into a high-speed mixer;
S2. The inorganic powder material, black masterbatch, lubricant, antioxidant, and light stabilizer are added into the high-speed mixer according to a mass percentage. The high-speed mixer is started and the raw materials are mixed evenly for 60s-300s to obtain a mixture;
S3. The mixture is fed into the feeding port of a twin-screw extruder and the material is cooled in a water tank, air dried, and pelletized to obtain the low-shrinkage polyethylene sheathing material.

The process parameters of the twin-screw extruder during operation are: the temperature of the first zone is 170°C, the temperature of the second zone is 170°C, the temperature of the third zone is 175 °C, the temperature of the fourth zone is 180°C, the temperature of the fifth zone is 185°C, the temperature of the sixth zone is 190°C, the temperature of the seventh zone is 190°C, the temperature of the eighth zone is 185°C, the temperature of the ninth zone is 175°C, and the temperature of the tenth zone is 100°C, and the screw speed is 200r/min, the temperature of the water tank is 35 °C.

It can be understood that after the extruded material is cooled, air dried and pelletized in the water tank, the material is further cleaned, cooled, dried, weighed, and packaged.

Another embodiment of the present invention provides an application of the aforementioned low-shrinkage polyethylene sheathing material. The low-shrinkage polyethylene sheathing material is applied to communication cables without armor or reinforcement structures. The low-shrinkage polyethylene sheathing material is processed into the sheath of the communication cable by extrusion technology.

The following is a description of the application through specific embodiments.

### Embodiment 1

35kg of LLDPE resin, 20kg of MDPE resin, 11kg of HDPE resin, 12kg of elastomer, and 8kg of compatibilizers (including PE-g-ST compatibilizer and POE-g-MAH compatibilizer with a mass ratio of 1:1) are mixed in a batch mixer to obtain a mixed resin, which is then put into a material bin and added to a high-speed mixer;
8.2kg of inorganic powder (light calcium carbonate), 5kg of black masterbatch (LLDPE resin carrier with a mass percentage of 50%), 0.3kg of lubricant (including fluorine-containing lubricant), 0.3kg of antioxidant (including antioxidant 1010 and DLTP with a mass ratio of 1:1), and 0.2kg of light stabilizer (including UV absorber UV326 and radical scavenger 944 with a mass ratio of 1:1) are added to the high-speed mixer, and the high-speed mixer is started to mix the raw materials evenly for 60s-300s to obtain a mixture;
The mixture is fed into the twin-screw extruder from the feeding port, and the extruded material is cooled by water tank, air-dried, pelletized (the process parameters of the twin-screw extruder during operation are: the temperature of the first zone is 170°C, the temperature of the second zone is 170°C, the temperature of the third zone is 175°C, the temperature of the fourth zone is 180°C, the temperature of the fifth zone is 185°C, the temperature of the sixth zone is 190°C, the temperature of the seventh zone is 190°C, the temperature of the eighth zone is 185°C, the temperature of the ninth zone is 175°C, and the temperature of the tenth zone is 100°C, and the screw speed is 200r/min, the temperature of the water tank is 35°C). After that, the material is cleaned, cooled, dried, weighed, and packaged to obtain a low-shrinkage polyethylene sheathing material.

### Embodiment 2

Embodiment 2 is similar to embodiment 1, except that LLDPE resin is 42kg and the elastomer is 3kg.

### Embodiment 3

Embodiment 3 is similar to embodiment 1, except that the inorganic powder (light calcium carbonate) is 2.2kg.

### Embodiment 4

Embodiment 4 is similar to embodiment 1, except that the compatibilizers are 1.5kg.

### Comparative Example 1

Comparative Example 1 is similar to embodiment 1, except that no elastomer is added.

### Comparative Example 2

Comparative Example 2 is similar to embodiment 1, except that no inorganic powder material is added.

### Comparative Example 3

Comparative Example 3 is similar to embodiment 1, except that no compatibilizer is added.

### Comparative Example 4

Comparative Example 4 is similar to embodiment 1, except that all the compatibilizers are PE-g-ST compatibilizers.

### Comparative Example 5

Comparative Example 5 is similar to embodiment 1, except that MDPE resin is 1kg and HDPE resin is 32kg.

Comparative Examples 6-8 use three commercially available polyethylene sheathing materials, namely, HE6062 from Nordic Chemical, H2001WC from SCG, and ME6052.

The polyethylene sheathing materials obtained from Embodiments 1-4 and Comparative Examples 1-5 were subjected to mechanical performance testing according to national standards, and the test results are shown in Table 1.

**Table 1**

| | Tensile strength MPa | Elongati on at break % | Melt flow rate g/10min | Resistance to environmental stress cracking (500h) | Air oven heat aging 110±2°C, 240h | |
|---|---|---|---|---|---|---|
| | | | | | Tensile strength MPa | Elongation at break % |
| Embodiment 1 | 28.5 | 923.56 | 1.1 | uncracked | 25.07 | 803.49 |
| Embodiment 2 | 31.26 | 869.34 | 0.9 | uncracked | 26.12 | 798.25 |
| Embodiment 3 | 33.12 | 912.36 | 1.2 | uncracked | 30.65 | 841.32 |
| Embodiment 4 | 25.58 | 689.32 | 1.0 | uncracked | 20.89 | 595.36 |
| Comparative Example 1 | 32.59 | 925.69 | 1.2 | uncracked | 28.59 | 856.24 |
| Comparative Example 2 | 34.58 | 985.63 | 0.8 | uncracked | 30.21 | 900.56 |
| Comparative Example 3 | 24.32 | 700.05 | 1.1 | uncracked | 19.89 | 583.69 |
| Comparative Example 4 | 26.89 | 758.98 | 1.0 | uncracked | 21.69 | 625.88 |
| Comparative Example 5 | 35.26 | 956.38 | 1.0 | uncracked | 31.25 | 910.56 |

The polyethylene sheathing materials obtained from Embodiments 1-4 and Comparative Examples 1-8 were subjected to hardness testing according to national standards, and the results are shown in Table 2.

**Table 2**

| Embodiment | Shore hardness (D) | Embodiment | Shore hardness (D) |
|---|---|---|---|
| Embodiment 1 | 45 | Comparative Example 3 | 47 |
| Embodiment 2 | 50 | Comparative Example 4 | 50 |
| Embodiment 3 | 48 | Comparative Example 5 | 51 |
| Embodiment 4 | 45 | Comparative Example 6 | 60 |
| Comparative Example 1 | 54 | Comparative Example 7 | 62 |
| Comparative Example 2 | 47 | Comparative Example 8 | 56 |

The cable core of an optical cable is passed through the center hole of the extrusion mold core of the sheathing and the cable core is pulled. Then, the polyethylene sheathing materials obtained from Embodiments 1-4 and Comparative Examples 1-7 are extruded and coated on the cable core to form a sheathing, thereby producing an optical cable (wire). The cable core traction speed (cabling processing performance) and the apparent effect of the produced sheathing are shown in Table 3.

**Table 3**

| | Cable pulling speed (m/min) | Apparent property |
|---|---|---|
| Embodiment 1 | ≤80 | Smooth and bright |
| Embodiment 2 | ≤80 | Smooth and bright |
| Embodiment 3 | ≤60 | Smooth and bright |
| Embodiment 4 | ≤30 | The melt breaks easily |
| Comparative Example 1 | ≤80 | Smooth and bright |
| Comparative Example 2 | ≤60 | Smooth and bright |
| Comparative Example 3 | ≤10 | The melt breaks easily |
| Comparative Example 4 | ≤30 | The melt breaks easily |
| Comparative Example 5 | ≤70 | Smooth and bright |
| Comparative Example 6 | ≤80 | Smooth and bright |
| Comparative Example 7 | ≤60 | Smooth and bright |
| Comparative Example 8 | ≤80 | Smooth and bright |

The shrinkage rate of the sheath and the attenuation effect of the optical fiber for embodiments 1 to 4 and comparative example 1 to 7 were tested, and the testing standards and methods were as follows. The test results are shown in Table 4.

Shrinkage rate (shrinkage after extrusion): According to standard IEC 60794-1-22-2017, use the F17 cable shrinkage testing (fiber extrusion) method to cut a 10-meter sample at a distance of at least 2 meters from the cable end. Then, place the cable horizontally and measure the fiber overhang length and the contraction of the sheath. The measurement accuracy is 0.1 mm.

Shrinkage rate (shrinkage after high and low temperature cycle): According to standard IEC 60794-1-22-2017, cut a 10-meter sample at a distance of at least 2 meters from the cable end. Loosely wind the cable into a coil and fix it loosely in two opposing positions so that the cable components can move freely. Put the coiled cable into a high and low temperature cycle test box (70°C, 12h to -20°C, 12h) for 7 days. After removing the cable, let it sit for 24 hours, then place it horizontally and measure the fiber overhang length and the shrinkage of the sheath. The measurement accuracy is 0.1 mm.

Optical fiber attenuation test: According to standard YDT 901-2018, the attenuation window selection is 1310nm and 1550nm.

**Table 4**

| | Shrinkage rate (shrinkage after extrusion) | fiber attenuation after extrusion | Shrinkage rate (shrinkage after high and low temperature cycle) | fiber attenuation after high temperature cycle |
|---|---|---|---|---|
| Embodiment 1 | 0.1‰ | Up to standard | 0.3‰ | Up to standard |
| Embodiment 2 | 1.8‰ | Up to standard | 3.0‰ | Below standard |
| Embodiment 3 | 1.7‰ | Up to standard | 3.2‰ | Below standard |
| Embodiment 4 | 0.6‰ | Up to standard | 1.5‰ | Up to standard |
| Comparative Example 1 | 2.0‰ | Below standard | 3.8‰ | Below standard |
| Comparative Example 2 | 2.3‰ | Below standard | 4.1‰ | Below standard |
| Comparative Example 3 | 0.7‰ | Up to standard | 1.8‰ | Up to standard |
| Comparative Example 4 | 0.5‰ | Up to standard | 1.6‰ | Up to standard |
| Comparative Example 5 | 0.6‰ | Up to standard | 1.2‰ | Below standard |
| Comparative Example 6 | 3.8‰ | Up to standard | 6.8‰ | Below standard |
| Comparative Example 7 | 6.5‰ | Below standard | 9.2‰ | Below standard |
| Comparative Example 8 | 2.7‰ | Up to standard | 6.5‰ | Below standard |

Comparing embodiment 1 and embodiment 4 with comparative example 3 reveals that the compatibilizer has a significant impact on the processing and mechanical properties of the sheath material. Table 1 and Table 3 show that the addition of little or no compatibilizer leads to relatively poorer processing and mechanical properties, with the tendency for melt fracture to occur during processing. This is mainly because the compatibilizer enhances the compatibility between different resins and between resins and inorganic powder materials, thereby increasing the processing performance of the material.

Comparing embodiment 1 and comparative example 4 reveals that the addition of only PE-g-ST compatibilizer is insufficient to fully address the compatibility issues between the components, with required improvements in material processing performance. Table 3 shows that adding only PE-g-ST compatibilizer leads to lower cable traction speed.

Comparing embodiment 1 and comparative example 5 reveals that, compared to LLDPE resin and HDPE resin, the MDPE resin has a lower shrinkage rate perpendicular to the melt flow direction, resulting in less stress being generated in the direction perpendicular to the sheath traction during sheath cabling, which benefits the compliance of fiber attenuation requirements.

Comparing embodiment 1 with embodiment 2 and comparative example 1 reveals, through Table 2 and Table 4, that the elastomer suppresses the overall crystallinity of the anti-shear material and increases the overall toughness of the material, thereby lowering its shrinkage rate while ensuring compliant fiber attenuation during sheath cabling.

Comparing embodiment 1 with embodiment 3 and comparative example 2 reveals, from Table 4, that the inorganic powder material lowers the intermolecular forces between the molecules in the material to reduce its shrinkage rate, and reduces the stress on the fiber in the sheath during the shrinking process, thus resulting in compliant fiber attenuation.

The low-shrinkage polyethylene sheath material provided in this invention's embodiments uses low-crystallinity LLDPE resin and MDPE resin with lower shrinkage rate perpendicular to the melt flow direction. The overall crystallinity of the elastomer is suppressed to increase material toughness and reduce shrinkage rate, with the inorganic powder material used to lower intermolecular forces in the material and reduce stress on the fiber during sheath cabling to achieve compliant fiber attenuation. This low-shrinkage polyethylene sheath material overcomes the issue of high cable shrinkage rate with conventional polyethylene sheath materials, and the sheath made of this material shows almost no shrinkage after high and low temperature cycle testing, while exhibiting excellent processing and mechanical properties. Additionally, the resulting sheath can directly be applied to fiber cables with unsupported reinforcing structures, resolving the issue of shrinking during sheath cabling and fiber attenuation after extrusion. The fiber attenuation also conforms to requirements after high and low temperature cycle testing.

The aforementioned disclosure represents the best embodiment of the present invention and should not serve to limit the invention, as those skilled in the art will appreciate that equivalent changes and modifications fall within the scope of the invention.

## Claims

1. A low-shrinkage polyethylene sheathing material, comprising the following weight percentages of components: LLDPE resin in the range of 35-45%, MDPE resin in the range of 20-25%, HDPE resin in the range of 4-15%, elastomer in the range of 4-15%, inorganic powder material in the range of 2-15%, compatibilizer in the range of 1-13%, black masterbatch in the range of 4.7-5.7%, lubricant in the range of 0.2-1%, antioxidant in the range of 0.3-0.5%, and light stabilizer in the range of 0.1-0.6%.

2. The low-shrinkage polyethylene sheathing material of claim 1, wherein the melt flow rate of the MDPE resin is not more than 2g/10min at 190°C and 2.16 Kg.

3. The low-shrinkage polyethylene sheathing material of claim 1, wherein the melt flow rate of the LLDPE resin is not more than 3g/10min at 190°C and 2.16 Kg, and the melt flow rate of the HDPE resin is not more than 10g/min at 190°C and 2.16 Kg.

4. The low-shrinkage polyethylene sheathing material of claim 1, wherein the elastomer is selected from polyolefin elastomer, ethylene-propylene rubber, and ethylene-vinyl acetate copolymer.

5. The low-shrinkage polyethylene sheathing material of claim 1, wherein the inorganic powder material is selected from light calcium carbonate and mica powder, and the particle size of the inorganic powder material is not more than 0.7µm.

6. The low-shrinkage polyethylene sheathing material of claim 1, wherein the compatibilizer is selected from PE-g-ST compatibilizer and POE-g-MAH compatibilizer, and the mass ratio of the PE-g-ST compatibilizer to the POE-g-MAH compatibilizer is 1:1.

7. The low-shrinkage polyethylene sheathing material of claim 1, wherein the black masterbatch comprises pigment carbon black and LLDPE resin carrier, wherein the mass fraction of the pigment carbon black is not less than 45%, and the mass fraction of the LLDPE resin carrier is not less than 50%; the melt flow rate of the LLDPE resin carrier is not less than 2.0g/10min at 190°C and 2.16kg.

8. The low-shrinkage polyethylene sheathing material of claim 1, wherein the lubricant is a fluorine-containing lubricant, the antioxidant is selected from one or more of antioxidant 1010, antioxidant 1076, antioxidant 330, antioxidant 168, and antioxidant DLTP, and the light stabilizer is selected from one or more of UV absorber UV326, UV absorber UV531, and radical scavenger 944.

9. A method for preparing the low-shrinkage polyethylene sheathing material of claims 1-8, comprising:
mixing the LLDPE resin, MDPE resin, HDPE resin, elastomer, and compatibilizer resin according to the weight percentages to obtain a pre-mixed mixture; adding the pre-mixed mixture to the feeding port of a twin-screw extruder;
adding the inorganic powder material, black masterbatch, lubricant, antioxidant, and light stabilizer to a high-speed mixer according to the weight percentages, and homogenizing the materials for 60s-300s to obtain a mixture;
introducing the mixture into the twin-screw extruder, extruding the material, and cooling and cutting the material to obtain the low-shrinkage polyethylene sheathing material.

10. The application of the low-shrinkage polyethylene sheathing material of claims 1-8, wherein the low-shrinkage polyethylene sheathing material is applied to communication cables without armor and reinforcement structures.
